## Europäisches Patentamt
## European Patent Office
## Office européen des brevets

(11) Publication number: **0 107 091**
**B1**

(12) **EUROPEAN PATENT SPECIFICATION**

(45) Date of publication of patent specification: **14.03.90**

(51) Int. Cl.⁵: **H 04 N 13/00**

(21) Application number: **83109671.4**

(22) Date of filing: **28.09.83**

(54) **Stereo television system.**

(30) Priority: **27.10.82 US 437088**
**29.09.82 US 426503**

(43) Date of publication of application:
**02.05.84 Bulletin 84/18**

(45) Publication of the grant of the patent:
**14.03.90 Bulletin 90/11**

(84) Designated Contracting States:
**DE FR GB NL**

(56) References cited:
**FR-A-1 010 147**
**US-A-3 992 573**

**ELECTRONICS, vol. 1, no. 6, 18th March 1968,**
**pages 132,133, New York, US; M.G. MAXWELL:**
**"Cameras that wink can produce 3-D tv"**

(73) Proprietor: **HONEYWELL INC.**
**Honeywell Plaza**
**Minneapolis Minnesota 55408 (US)**

(72) Inventor: **Jackman, Earle G.**
**15810 - 228th Avenue**
**Elk River Minnesota 55330 (US)**
Inventor: **Hughes, Frank J.**
**7204 Glouchester Drive**
**Edina Minnesota 55435 (US)**

(74) Representative: **Rentzsch, Heinz et al**
**Honeywell Europe S.A. Holding KG Patent- und**
**Lizenzabteilung Kaiserleistrasse 55**
**D-6050 Offenbach am Main (DE)**

Courier Press, Leamington Spa, England.

## Description

This invention relates to the field of electro-optical communication, and particularly to apparatus by which stereo, or seemingly three-dimensional, images may be transmitted and received by television.

### Background of the Invention

It is known from US—A 4 286 286 to provide apparatus by which television images received at a local monitor may be given a three-dimensional appearance.

In that system shuttering means are provided at the transmitter to alternatively transmit signals representative of the apperance of a subject from two horizontally spaced viewpoints. The shuttering is correlated with the interlace components in the transmitted signal, and synchronized shuttering means are provided at the receiving monitor, to be worn as spectacles by the observer. The human brain functions, as is well known, to combine the rapidly alternating, slightly different right and left images to give the appearance of a three-dimensional image of the subject.

The arrangement described above has certain disadvantages. The spectacles are somewhat heavy, and the shuttering means therein requires relatively high voltage to operate satisfactorily, thus providing a certain hazard to the user. In addition, the spectacles are expensive, and further each pair must be connected to the receiver by a cable, limiting the movement of the observer relative to the receiver.

A similar system disclosing the features of the preamble of the independent claim is known from US—A 39 92 573. It includes a closed-loop television system comprising a camera and a monitor. The subject is seen from two viewpoints through two separate shutters provided in front of the camera and the observer bears an eyepiece having included two shutters which are operated in synchronism with the shutters in front of the camera. The monitor alternatively presents a left side and a right side picture of the subject and the shutters are alternately opened and closed accordingly.

FR—A 10 10 147 corresponding to US—A 26 65 335 describes a stereoscopic television method and apparatus using polarizing means on the receiver side together with polarizing eyepieces for distinguishing the left side picture and the right side picture. In a first embodiment (Figs. 3 + 4) optical means are provided between the subject and the camera such that the left side picture and the right side picture are positioned side by side on the photosensitive surface of the camera. This method reduces the resolution of the system and therefore the picture quality. In a second embodiment the left side image and the right side image are alternately presented to the light sensitive surface of the camera by means of a rotating disc having a semi-circular slot in connection with a complicated prism system exposed to the left side and the right side picture of the subject (Figs. 8 and 9). Such rotating scanning means are difficult to synchronize with the receiver.

At the receiver side a cathode ray tube presents alternately the left side and the right side pictures and between this tube and a translucent or reflecting screen a polarizing filter and a Kerr cell are provided with this cell rotating the plane of the light falling through it in synchronism with the alternate formation of the left side picture and the right side picture on said cathode ray tube. The observer uses spectacles having polarizing glasses the polarization planes of which are perpendicular to each other.

### Summary of the Invention

It is the object of the invention to provide a three-dimensional presentation of television images without the limitations to the observer as mentioned above and with widely using components of well-known television systems. This object is achieved by the invention as characterized in claim 1. Briefly, the invention makes use of plan polarized light to provide a system in which the observer's spectacles are light and inexpensive and contains eyepieces of polaroid with crossed axes. A projection television monitor is used, with a screen which does not disturb the plane of polarization of light falling on it. The system can be used with either monochrome or color installations.

Various improvements and modifications of the invention are pointed out with particularity in the subclaims. For a better understanding of the invention, its advantages, and objects attained by its use, reference should be had to the attached drawing and to the accompanying description of a preferred embodiment of the invention.

### Brief Description of the Drawing

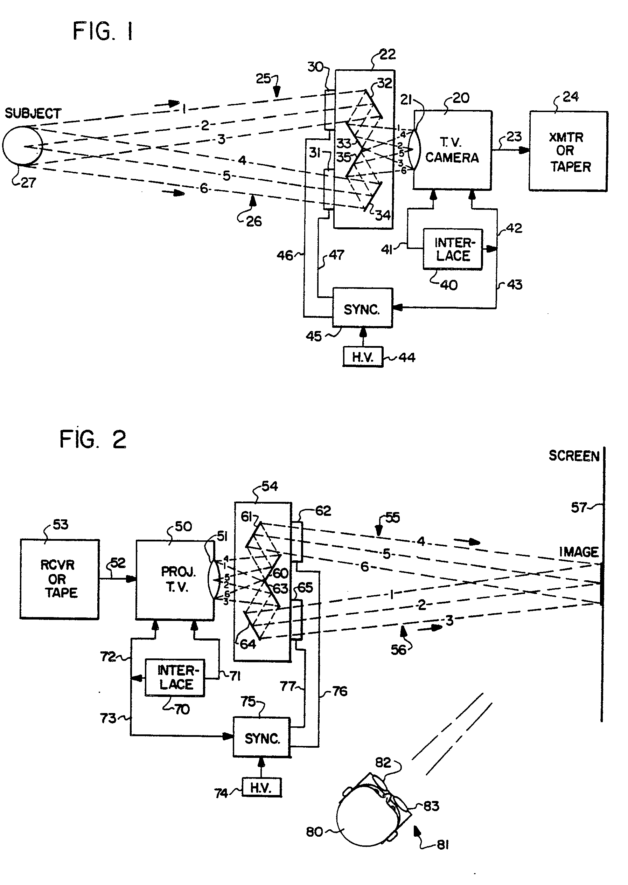

Figure 1 shows a stereo transmitting apparatus, and

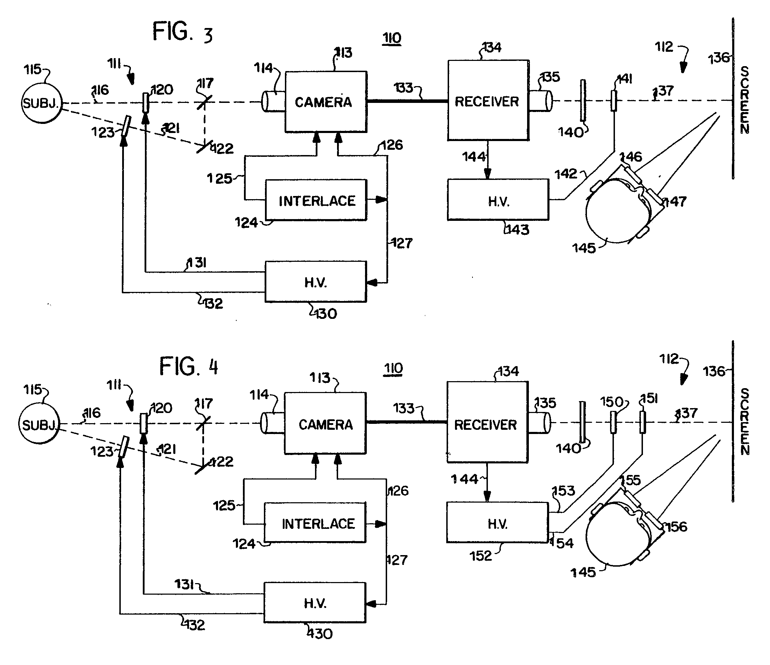

Figure 2 shows the associated receiving appraratus according to a first embodiment. Fig. 3 shows a second and Fig. 4 shows a third embodiment of the TV-system.

### Description of the Preferred Embodiments

In Figure 1 a television camera 20, either monochrome or color, has a lens 21 which cooperates with a mirror box or periscope 22 to supply light to produce image signals, which are conducted on a link 23 to a transmitter or taper 24. Light reaches box 22 along two paths 25 and 26, which diverge from a subject 27. Mirror box 22 includes a pair of shutters 30 and 31 defining paths 25 and 26. A first pair of mirrors 32 and 33 direct light from path 25 to lens 21, and a second pair of mirrors 34 and 35 directs light from path 26 to lens 21 so that it falls on the same working area in camera 20. Conventional interlace circuitry 40 supplies a horizontal sweep to camera 20 on conductor 41, and supplies a vertical sweep to camera 20 on conductor 42. Conductor 42 is extended at 43 to control the supply of high voltage from a source 44 through a synchronizer 45, and energize shutters 30 and 31 alternately through conductors 46 and 47.

While shutters 30 and 31 may be of any nature capable of opening and closing at the rate of 60 times per second, an electro-optical shutter is preferred. Such shutters are disclosed in Applied Optics Volume 14, No. 8 (August 1975), and consist of thin transparent wafers of lanthanum modified lead zirconate titanate (PLZT), having interdigital electrodes vacuum deposited in mirror imaged fashion on the opposite surfaces. The wafers are mounted between crossed polarizers. When the proper electric field is applied between the electrodes, such a disk rotates the plane of polarization of the light and the first polarizer, which can then pass through the second polarizer. When the field is de-energized, the plane of polarization is not rotated and no light passes through the second polarizer.

The arrangement is such that shutter 30 is open only when shutter 31 is closed, and shutter 31 is open only when shutter 30 is closed. Accordingly the light reaching camera 20 comprises a train of alternate images from left and right viewpoints arranged to correspond with the normal human interocular distance.

In Figure 2 a projection television monitor 50 projects from a lens 51 images determined by the input 52 supplied by a television receiver or tape player 53.

A mirror box 54 cooperates with len 51 to act as a beam splitter and divide the proected images into two beams 55 and 56 which fall on the same working area of a scree 57. Light for beam 55 is reflected by mirrors 60 and 61 and passes through a shutter 62, while light for beam 56 is reflected by mirrors 63 and 64 and passes through a shutter 65. The mirrors are such so that each beam covers the entire surface of lens 51.

Conventional interlace circuitry 70 supplies a horizontal sweep signal to monitor 50 on a conductor 71, and supplies a vertical sweep signal to monitor 50 on a conductor 72; conductor 72 is extended at 73 to control the supply of high voltage from source 74 through a synchronizer 75 and energize shutters 62 and 65 alternately through conductors 76 and 77. Shutters 62 and 65 are like shutters 30 and 31 previously described, except that the second polarizer is omitted from each. Beams 55 and 56 are thus plane polarized light, the planes of polarization being rotated by 90° depending on whether shutters 62 and 65 are energized or not, and screen 57 is of such a nature as to reflect light falling on it without alternating its state of polarization. An observer 80 is provided with viewing apparatus 81 in the form of a pair of light spectacles having left and right eyepieces containing polaroid material positioned in 90° relation, so that light which is polarized to pass left eyepiece 82 will not pass right eyepiece 83 and vice versa.

## Operation

The operation of the invention is as follows. During a first interval right camera shutter 30 is open and left shutter 31 is closed, so light from the right hand viewpoint, beam 25, reaches camera 20 and a resultant image signal is created, combined with an interlace signal, and the composite signal is supplied at 23 to transmitter 24. At the receiver the image signal is projected from lens 51, and the interlace signal acts to open shutter 62, shutter 65 remaining closed. The oberver's eyepieces are so oriented that the light from shutter 62, reflected from screen 57, is transmitted by eyepiece 83, and blocked by eyepiece 82.

At the next interval shutter 31 is open and shutter 30 is closed, so light from the left hand viewpoint, beam 26, reaches camera 20. A resultant image signal is created, combined with an interlace signal, and the composite signal is supplied at 23 to transmitter 24. At the receiver the image signal is projected from lens 51, and the interlace signal acts to open shutter 65, shutter 62 remaining closed. The observer's eyepiece 82 transmits the light reflective from screen 57 and eyepiece 83 blocks the light.

From the above it will be apparent that the invention comprises a stereo television system in which an observer is free to mount with respect to a projection television monitor, and is not connected thereby by any wire. The observer wears simple inexpensive spectacles in which the eyepiece are a polaroid, and can move freely with respect to the monitor.

Turning now to Figure 3 a television system 110 according to a second embodiment comprises a transmitter 111 and a receiver 112. At transmitter 111 a television camera 113, color or monochrome, has its lens 114 directed toward a subject 115. Interposed on the direct line of sight 116 are a 50% transmission mirror 117 and a electro-optical shutter 120. Mirror 117 acts as a beam splitter and establishes a second line of sight 121 which includes a mirror 122 and a second electro-optical shutter 123. Mirror 122 is positioned so that the lines of sight 116 and 121 have the same relation from subject 115 as would those from the eyes of an observer having the normal human interocular spacing.

Conventional interlace circuitry 124 supplies horizontal and vertical sweep signals to camera 113 on conductors 125 and 126, and conductor 126 is extended as conductor 127 to control a high voltage source 130 which alternately enables and disables shutters 120 and 123, on conductors 131 and 132, so that each shutter is open only when the other is closed.

The output of camera 113 is a composite signal having interface and image components, and is transmitted on a conductive or radio link 133 to a projection television receiver 134 having a lens 135 which projects its image on a screen 136. Interposed in the line of sight 137 from lens 135 to screen 136 are a polarizer 140 of polaroid or similar material, and an electro optical shutter 141 actuated by signals on a conductor 142 from a high voltage supply 143 synchronized through conductor 144 from the interlace circuitry of receiver 134 to shift between two states. In a first state shutter 141 allows the polarized light from receiver 134 and polarizer 140 to pass without modification, and in a second state it causes the plane of polarization of the light to rotate by substantially 90 degrees.

An observer 145 wears a pair of spectacles having left and right eyepieces 146 and 147 of polaroid, with the planes of polarization mutually at substantially 90 degrees, to transmit respectively light passed by shutter 141 in its first and second states.

Turning now to Figure 4, the third embodiment differs from the second embodiment only in the shuttering means at the monitor. Elements 113—140 are the same in both embodiments, and receiver 134 supplies a synchronizing signal 144 as before. However, in the second embodiment a pair of electro optical shutters 150 and 151 are interposed in the line of sight 137 between polarizer 140 and screen 136, and are energized alternately from high voltage source 152 on conductors 153 and 154. Shutters 150 and 151 have normal states in which they transmit the light from polarizer 140 to screen 136 without modifying its polarized state. The shutters are energized alternately. When energized they act severally to cause the plane of polarization of the light to rotate by substantially 45 degrees, in first and second opposite directions.

Observer 145 wears spectacles having left and right eyepieces 155 and 156 of polaroid. The planes of polarization are at 90 degrees as before, and again are aligned to transmit respectively light passed by shutters 150 and 151 in their energized states. Since one of the shutters 150 and 151 is always energized, there is no interval during which unmodified light from polarizer 140 reaches screen 136, and one of eyepieces 155 and 156 is always "open" when the other is "closed."

Operation

Referring to Figure 3, the operation of the system is as follows. During a first interval left camera shutter 123 is open and right shutter 120 is closed. During this interval shutter 141 is in such a state that light transmitted to screen 136 and reflected therefrom is of the state of polarization transmitted by eyepiece 146 and blocked by eyepiece 147. In the next interval right camera shutter 120 is open and left shutter 123 is closed, and shutter 141 is in such a state that light transmitted to screen 136 and reflected thereby is of the state of polarization transmitted by eyepiece 147 and blocked by eyepiece 146. It is of course understood that screen 136 is of such a nature as to deflect light falling on it without modifying its plane of polarization.

The system of Figure 4 operates in generally the same manner. During a first interval left camera shutter 123 is open, right shutter 120 is closed, shutter 150 is deenergized to enable transmission of light from polarizer 140 to shutter 151, and shutter 151 is energized to rotate the plane of polarization by 45 degrees in the first direction, so that the resultant light, when reflected by screen 136, is transmitted by eyepiece 155 and blocked by eyepiece 156. During the next interval left camera shutter 123 is closed, right shutter 120 is open, while shutter 150 is energized to rotate the plane of polarization of light from polarizer 140 by 45 degrees in the second direction, and shutter 151 is deenergized to transmit the light without furthr rotation, so that the resulting light is transmitted by eyepiece 156 and blocked by eyepiece 155. In each embodiment of the invention the observer's eyes see trains of light images from the left and right transmitting viewpoints, which are merged in his brain to give the appearance of a three-dimensional image.

From the above it will be evident that the three-dimensional television system uses a projection television together with light polarizing and shuttering means at the receiver, and simple polarizing spectacles to be worn by the observer.

Claims

Television system for generating three-dimensional pictures of a subject, comprising
a) a single television camera (20; 113);
b) light directing means (22;117;122) positioned in front of said camera (20;113) for viewing said subject (27;115) from left and right viewpoints horizontally spaced by substantially the human interoccular distance and forming two light paths between the subject and the camera;
c) first shutter means (30,31;120,123) provided in each of said two light paths between the subject (27,115) and the camera;
d) control means (40,44,45;124,130) for alternating enabling such shutter means in synchronism with the interlace frequency of said television camera;
e) a television receiver (50;134) for alternately presenting the images from the two viewpoints on the same area of a screen (57;136);
f) second shutter means (62,65;141;150,151) provided in the light path between the receiver (50;134) and the observer (81,145) with both the first and second shutter means being alternately enabled in synchronism with said interlace frequency;
g) a pair of eyepieces (82,83;146,147;155,156) for observing the picture on said screen, characterized in that
the television receiver is a projection receiver (50,134) for projecting the image on a screen (57,136) which transmits or reflects the image without changing the state of polarization thereof;
i) optical means (54;140) are provided between said receiver and said screen for alternately and oppositely rotating the planes of polarization of the projected light in synchronism with the interface frequency of the receiver;
j) the second shutter means (62,65;141;150,151) is provided in the light paths between the projecting receiver (50;134) and the screen (57;136); and
k) the eyepieces (82,83;146,147;155,156) have planes of polarization differing by substantially 90°C.

2. A system according to claim 1, characterized in that the light directing means (22) comprises first and second mutually spaced sites (32,34) in the form of mirror surfaces directing their respective images on the same area of said camera; and the optical means (54) includes a beam splitter (60—65) projecting onto said screen alternately in synchronism with the interlace frequency a first picture of the subject as seen by said first site, said projected first picture having a first plane of polarization, and projecting a second picture of the subject as seen by said second site, said second projected picture having a second plane of polarization (Fig. 1).

3. A system according to claim 2, characterized in that the optical means (54) includes a beam splitter (60,63), a pair of light polarizers (62,65) in mutually 90° relationship, means (61,64) directing a pair of beams from said beam splitter through said polarizers to substantially the same aree of the screen (57), a pair of shutters (62, 65) between said receiver and said screen, and means (74,75) actuating said shutters alternately at first frequency (Fig. 2).

4. A system according to one of claims 1 to 3, characterized in that the mutual spaced sites (32,34) and/or the beam splitter (60,63) are formed by mirrors.

5. A system according to one of claims 1 to 4, characterized in that the shutters (30,31;62,65) are electro-optical shutters.

6. A system according to claim 5, characterized in that the shutters consist of PLZT ceramic.

7. A system according to the preceding claims, characterized by
a) the television camera comprising interlace circuitry (40) for creating a composite signal including an interlace component and a video component in which said video signals are alternated at a predetermined rate;
b) the camera further having an output (23) for connection to a transmitter or a recorder;
c) the projection receiver (50) including video circuitry and interlace circuitry (70) for receiving said composite signal and projecting light as an image determined by said video signals; and
d) the projection receiver further having an input (52) for connection to a receiver or recorder (Fig. 1+2).

8. A system according to claim 1, characterized by
a) the television camera (113) and the projection receiver (134) being connected together by a cable (133);
b) interlace curcuitry (124) associated with the camera (113) for creating a composite signal including an interlace component and a video component in which said video signals are alternated at a predetermined rate, with both components being supplied to said projection receiver (134) via said cable (133) (Fig. 3 and 4).

9. System according to the claims 1 to 8, characterized in that said shutter means (62,65;141) comprises means normally transmitting said beam, and energizable to rotate the plane of polarization of said beam by substantially 90 degrees.

10. System according to claims 1 or 8, characterized in that said shutter means comprises first (150) and second (151) means normally transmiting said beam and severally energizable to rotate the plane of polarization of said beam by substantially 45 degrees in opposite senses.

11. A television monitor for the system according to one of the preceeding claims, characterized by
a) video circuitry and interlace circuitry (124), for receiving a composite signal and projecting a beam of light as an image determined by the said video circuitry;
b) a screen (136) receiving said image, said screen reflecting light falling thereon without altering the state of polarization thereof;
c) light polarizing means (140) between said receiver (134) and said screen for polarizing the light projected by said receiver; and
d) electro-optical shutter (141) means beween said receiver and said screen and controlled by said interlace curcuitry to shift the light reaching said screen from said receiver between distinguishable states of polarization.

## Patentansprüche

1. Fernsehsystem zur Erzeugung dreidimensionaler Bilder eines Objekts mit
a) einer einzigen Fernsehkamera (20;113);
b) Lichtleitmitteln (22;117;122) vor der Kamera (20;113) zum Betrachten des Objekts (27;115) von linken und rechten Blickpunkten aus, die im Abstand des menschlichen Augenabstands angeordnet sind, so daß zwei Lichtwege zwischen Objekt und Kamera gebildet werden;
c) einer ersten Verschlußeinrichtung (30,31;120,123) in jedem der beiden Lichtwege zwischen Objekt (27;115) und Kamera;
d) Steuermitteln (40,44,45;124,13;) zum abwechselnden Betätigen der Verschlußeinrichtung synchron mit der Zwischenzeilenfrequenz der Fernsehkamera;
e) einem Fernsehempfänger (50;134) zur abwechselnden Darstellung der aus den beiden Blickpunkten gewonnenen Bilder auf der gleichen Fläche eines Bildschirms (57;136);
f) einer zweiten Verschlußeinrichtung (62,65;141;150,151) im Lichtweg zwischen dem Empfänger (50;134) und dem Betrachter (81;145), wobei beide Verschlußeinrichtungen abwechselnd synchron mit der Zwischenzeilenfrequenz betätigt werden;
g) einer Brille (82,83;146,147;155,156) zum Betrachten des Bildes auf dem Bildschirm; dadurch gekennzeichnet, daß
h) der Fernsehempfänger ein Projectionsempfänger (50;134) zum Projizieren des Bildes auf einem Schirm (57;136) ist, der das Bild ohne Änderung des Polarisationszustands hindurchläßt oder reflektiert;

i) optische Mittel (54;140) zwischen Empfänger und Schirm angeordnet sind, welche die Polarisationsebene des projizierten Lichts synchron mit der Zwischenzeilenfrequenz des Empfängers abwechselnd in entgegengesetzter Richtung drehen;

j) die zweite Verschlußeinrichtung (62,65;141;150,151) in den Lichtwegen zwischen Projektionsempfänger (50;134) und Schirm (57;136) angeordnet ist; und

k) die Gläser der Brille (82,83;146,147;155,156) um etwa 90°gegeneinander versetzte Polarisationsebenen aufweisen.

2. System nach Anspruch 1, dadurch gekennzeichnet, daß die Lichtleitmittel (22) erste und zweite im gegenseitigen Abstand vorgesehene Bereiche (32,34) in der Form von Spiegelflächen aufweisen, welchen ihre Bilder auf den gleichen Flächenbereich der Kamera werfen; und daß die optischen Mittel (54) einen Strahlenteiler (60—65) umfassen, der synchon mit der Zwischenzeilenfrequenz abwechselnd ein erstes, vom ersten Bereich gesehenes und ein zweites, vom zweiten Bereich gesehenes Bild des Objekts auf den Schirm wirft, wobei das projizierte erste Bild eine erste Polarisationsebene und das projizierte zweite Bild eine zweite Polarisationsebene hat (Fig. 1).

3. System nach Anspruch 2, dadurch gekennzeichnet, daß die optischen Mittel (54) umfassen einen Strahlenteiler (60,63);

zwei Polarisatoren (62,65) mit gegenseitigem 90°-Versatz; Mittel, um zwei Strahlen vom Strahlenteiler durch die Polarisatoren auf die gleiche Fläche des Schirms (57) zu werfen;

zwei Verschlüsse (62,65) zwischen dem Empfänger und dem Schirm; und

Mittel zur abwechselnden Betätigung der Verschlüsse mit der genannten Frequenz (Fig. 2).

4. System nach einem der Ansprüche 1 bis 3, dadurch gekennzeichnet, daß die im gegenseitigen Abstand angeordneten Bereiche (32,34) und/ oder die Strahlenteiler (60,63) durch Spiegel gebildet sind.

5. System nach einem der Anpsrüche 1 bis 4, dadurch gekennzeichnet, daß die Verschlüsse (30,31;62,65) elektro-optische Verschlüsse sind.

6. System nach Ansprüche 5, dadurch gekennzeichnet, daß die Verschlüsse aus PLZT-Keramik bestehen.

7. System nach einem der vorangehenden Ansprüche, gekennzeichnet, dadurch, daß

a) die Fernsehkamera eine Zwischenzeilenschaltung (40) enthält, welche ein aus einer Zwischenzeilenkomponente und einer Videokomponente zusammengesetztes Signal erzeugt, wobei die Videosignale mit vorgegebener Frequenz abwechseln;

b) die Kamera einen Ausgang (23) zum Anschluß eines Senders oder eines Recorders aufweist;

c) der Projektionsempfänger (50) eine Videoschaltung und eine Zwischenzeilenschaltung (70) Empfang des zusammengesetzten Signals aufweist und Licht als durch die Videosignale bestimmtes Bild projiziert; und

d) der Projectionsempfänger ferner einen Eingang (52) zum Anschluß an einen oder einen Recorder aufweist (Fig. 1 und 2).

8. System nach Ansprüch 1, gekennzeichnet durch

a) eine Fersehkamera (113) und einen Projecktionsempfänger (134) die durch ein Kabel (133) miteinander verbunden sind;

b) eine Zwischenzeilenschaltung (124) zur Erzeugung eines aus einer Zwischenzeilenkomponente und einer Videokomponente zusammengesetzten Signals, wobei die Videokomponente mit vorgebener Frequenz umgeschaltet wird und beide Komponenten über das Kabel (133) dem Projektionsempfänger (134) zugeleitet werden (Fig. 3 und 4).

9. System nach Ansprüche 1 oder 8, dadurch gekennzeichnet, daß die Verschlußeinrichtung (62,65;141) normalerweise den Lichtstrahl hundurchlassende Mittel umfaßt, die bei Ansteuerung die Polarisationsebene des Strahls um etwa 90° drehen.

10. System nach Ansprüche 1 oder 8, dadurch gekennzeichnet, daß die Verschlußeinrichtung erste (150) und zweite (151) normalerweise den Lichtstrahl hindurchlassende Mittel aufweist, die einzeln ansteuerbar sind, um die Polarisationsebene des Strahls un etwa 45° in entgegengesetzter Richtung zu drehen.

11. Fernsehbildschirmgerät für ein System nach einem der vorangehenden Ansprüche, gekennzeichnet durch

a) Videoschaltkreise und Zwischenzeilenschaltkreise (124) zum Empfang eines zusammengesetzten Signals und zum Projizieren eines Lichtstrahls als durch die Videoschaltkreise bestimmtes Bild;

b) einen das Bild empfangenden Schirm (136) der auf ihn auftreffenden Lichte ohne Änderung des Polarisationszustandes reflektiert;

c) eine Polarisationsvorrichtung (140) zwischen Empfänger (134) und Schirm zum Polarisieren des von Empfänger projizierten Lichts; und

d) eine elektro-optische Verschlußeinrichtung (141) zwischen Empfänger und Schirm, die gesteuert durch den Zwischenzeilenschaktkreis das von Empfänger auf den Schirm geworfene Licht zwischen unterscheidbaren Polarisationszuständen verschiebt.

**Revendications**

1. Système de télévision pour générer des images tridimensionnelles d'un objet, comprenant:

a) une caméra unique de télévision (20,113);

b) des moyens de direction de lumière (22, 117, 122) placés en face de ladite caméra (20, 113) pour viser ledit objet (27, 115) à partir de points de visée gauche et droite horizontalement espacés de sensiblement la distance humaine interoculaire et formant deux chemins lumineux entre l'objet et la caméra;

c) des premiers moyens formant obturateur (30, 31; 120, 123) prévus dans chacun desdits chemins

lumineux entre l'objet (27, 115) et la caméra;

d) des moyens de commande (40, 44, 45; 124, 130) pour alternativement placer lesdits moyens formant obturateur en synchronisme avec la fréquence d'entrelacement de la caméra de télévision;

e) un récepteur de télévision (50, 134) pour alternativement présenter les images émanant des deux points de visée sur la même région d'un écran (57, 136);

f) des seconds moyens formant obturateur (62, 65; 141; 150, 151) prévus dans le chemin lumineux entre le récepteur (54, 134) et l'observateur (81, 145), les premier et second moyens formant obturateur étant alternativement mis en synchronisme avec ladite fréquence d'entrelacement;

g) une paire d'oculaires (82, 83; 146, 147; 155, 156) pour observer l'image sur ledit écran, caractérisé en ce que:

h) le recepteur de télévision est un récepteur de projection (50, 134) pour projeter l'image sur un écran (57, 136) qui transmet ou réfléchit l'image sans modifier l'état de polarisation der celle-ci;

i) des moyens optiques (54, 140) sont prévus entre ledit récepteur et ledit écran pour alternativement faire tourner en sens opposé les plans de polarisation de la lumière projetée en synchronisme avec la fréquence d'entrelacement du récepteur;

j) les seconds moyens formant obturateur (62, 65; 141; 150, 151) sont prévus dans les chemins lumineux entre le récepteur de projection (50, 134) er l'écran (57, 136); et

k) les oculaires (82, 83; 146, 147; 155, 156) ont des plans de polarisation qui diffèrent de sensiblement 90°.

2. Système selon la revendication 1, caractérisé en ce que les moyens de directions de lumière (22) comprennent des premier et second sites mutuellement espacés (32, 34) sous la forme de surfaces de miroir dirigeant leurs images respectives sur la même région de ladite caméra; et en ce que les moyens optiques (54) comprennent un séparateur de faisceau (60 à 65) projetant sur ledit écran, alternativement en synchronisme avec la fréquence d'entrelacement, une première image de l'objet telle que vue par ledit premier site, ladite première image projetée ayant un premier plan de polarisation, et projetant une seconde image de l'objet telle que vue par le second site, ladite seconde image projetée ayant un second plan de polarisation (voir Figure 1).

3. Système selon la revendication 2, caractérisé en ce que les moyens optiques (54) comprennent un séparateur de faisceau (60, 63), une paire de polariseurs de lumière (62, 65) en relation mutuelle de 90°, des moyens (61, 64) pour diriger une paire de faisceaux à partir dudit séparateur de faisceau à travers lesdits polariseurs vers sensiblement le même région de l'écran (5), une paire de séparateurs (62, 65) entre ledit récepteur et ledit écran, des moyens (74,75) actionnant ces séparateurs alternativement à ladite fréquence (Figure 2).

Système selon l'une des revendications 1 à 3, caractérisé en ce que les sites mutuellement espacés (32, 34) et/ou le séparateur de faisceau (60, 63) sont formés par des miroirs.

5. Système selon l'une des revendications 1 à 4, caractérisé en ce que les opturateurs (30, 31; 62, 65) sont des obturateurs électro-optiques.

6. Système selon la revendication 5, caractérisé en ce que les obturateurs comprennent des céramiques PLZT.

7. Système selon l'une des revendications précédentes, caractérisé en ce que:

a) la caméra de télévision comprend une circuiterie d'entrelacement (40) pour créer un signal composite comprenant une composante d'entrelacement et une composante vidéo dans laquelle lesdits signaux vidéo sont alternés avec un taux prédéterminé;

b) la caméra comporte en outre une sorte (23) pour une liaison vers un émetteur ou un enregistreur;

c) le récepteur de télévision (50) comprend une circuiterie vidéo et une circuiterie d'entrelacement (70) pour recevoir ledit signal composite et pour projeter de la lumière comme une image déterminée par lesdits signaux vidéo; et

d) le récepteur de projection comporte en outre une entrée (52) en vue d'une liaison avec un récepteur ou un enregistreur (Figures 1 et 2).

8. Système selon la revendication 1, caractérisé en ce que:

a) la caméra de télévision (113) et le récepteur de projection (134) sont reliés ensemble par un câble (133);

b) une circuiterie d'entrelacement (124) est associée à la caméra (113) pour créer un signal composite comprenant une composante d'entrelacement et une composante vidéo dans laquelle lesdits signaux vidéo sont alternés à un taux prédéterminé, les deux composantes précitées étant appliquées audit récepteur de projection (134) par ledit câble (133) (Figures 3 et 4).

9. Système selon l'une des revendications 1 à 8, caractérisé en ce que lesdits moyens formant obturateur (62, 65; 141) comprennent des moyens transmettant normalement ledit faisceau et mis sous tension pour faire tourner le plan de polarisation dudit faisceau de sensiblement 90°.

10. Système selon l'une des revendications 1 à 8, caractérisé en ce que lesdits moyens formant obturateur comprennent des premier (150) et second (151) moyens transmettant normalement ledit faisceau et plusieurs fois mis sous tension pour entraîner en rotation le plan de polarisation dudit faisceau de sensiblement 45° dans des sens opposés.

11. Moniteur de télévision pour le système selon l'une des revendications précédentes, caractérisé par:

a) une circuiterie vidéo et une circuiterie d'entrelacement (124) pour recevoir un signal composite et projeter un faisceau de lumière comme une image déterminée par ladite circuiterie vidéo;

b) un écran (136) recevant ladite image, cet écran réfléchissant de la lumière tombant sur celui-ci sans altérer l'état de polarisation de celle-ci;

c) des moyens de polarisation de lumière (140) entre ledit récepteur (134) et l'écran pour polariser la lumière projetée par ce récepteur; et

d) des moyens formant obturateur életro-optique (141) entre le récepteur et l'écran et commandés par ladite circuiterie d'entrelacement pour décaler la lumière atteignant ledit écran à partir dudit récepteur entre des états distinctibles de polarisation.

FIG. 1

FIG. 2

EP 0 107 091 B1

FIG. 3

110

SUBJ. — CAMERA — RECEIVER — SCREEN

INTERLACE

H.V.

H.V.

FIG. 4

110

SUBJ. — CAMERA — RECEIVER — SCREEN

INTERLACE

H.V.

H.V.